# EUROPEAN PATENT APPLICATION

(11) **EP 4 529 022 A1**
(43) Date of publication of application: **26.03.2025**
(21) Application number: 23834568.0
(22) Date of filing: 05.06.2023
(51) Int. Cl.: H04B 1/38, H04B 1/04, H04L 5/14, H02M 1/08

(54) **DRIVING CIRCUIT AND ELECTRONIC DEVICE**

(30) Priority: 07.07.2022 CN 202210803403
(71) Applicant: Huawei Technologies Co., Ltd., Shenzhen, Guangdong 518129 (CN)
(72) Inventor: SUI, Xin, Shenzhen, Guangdong 518129 (CN); XU, Le, Shenzhen, Guangdong 518129 (CN); GU, Dongming, Shenzhen, Guangdong 518129 (CN)
(74) Representative: Thun, Clemens
(86) International application number: PCT/CN2023/098387
(87) International publication number: WO 2024/007794

(57) **Abstract**

This application provides a drive circuit and an electronic device, and relates to the field of electronic technologies, to reduce power consumption, simplify a structure of the drive circuit, and reduce design complexity. The drive circuit is used in a transmit circuit in an electronic device supporting full-duplex communication, and includes: a transimpedance amplifier, including a transconductor, a first driving stage, a second driving stage, a first feedback circuit, and a second feedback circuit, where two input ends of the transconductor are respectively coupled to one end of the first feedback circuit and one end of the second feedback circuit, two output ends of the transconductor are respectively coupled to input ends of the first driving stage and the second driving stage, the other ends of the first feedback circuit and the second feedback circuit are respectively coupled to one output end of the first driving stage and one output end of the second driving stage, and the other output ends of the first driving stage and the second driving stage serve as a differential output end of the transimpedance amplifier; and a hybrid circuit, including a first impedance circuit coupled between the output ends of the first driving stage and the second driving stage and a second impedance circuit coupled between the other output ends of the first driving stage and the second driving stage.

## Description

This application claims priority to Chinese Patent Application No. 202210803403.4, field with the China National Intellectual Property Administration on July 7, 2022 and entitled "DRIVE CIRCUIT AND ELECTRONIC DEVICE", which is incorporated herein by reference in its entirety.

### TECHNICAL FIELD

This application relates to the field of electronic technologies, and in particular, to a drive circuit and an electronic device.

### BACKGROUND

In recent years, automobile electronic systems are developing rapidly toward complexity and diversity. With implementation of 5G mobile technologies, autonomous driving, high-definition video transmission, and other functions play an important role. Data transmission over Ethernet has become the main direction of automobile network development and also brings new challenges to Ethernet information transmission. A line driver (line driver, LD) circuit is an important part of a transmit (transmit, TX) circuit of an Ethernet system. A main function of the line driver circuit is to drive a cable by using a 100Ω output impedance, to complete signal conversion and transmission, and separate a transmit signal from a receive signal at an output end through a hybrid (hybrid), to restore signals to be received, thereby implementing a full-duplex operating mode.

In the conventional technology, a current-type drive circuit is usually used. The current-type drive circuit generates an output voltage by a current flowing through a load resistor. However, an amplitude of the output voltage in the current-type drive circuit is positively correlated with the current flowing through the load resistor. Therefore, when the amplitude of the output voltage is large, power consumption is high. Therefore, a drive circuit with low power consumption is urgently needed.

### SUMMARY

This application provides a drive circuit and an electronic device, to resolve a problem of high power consumption of a drive circuit in the conventional technology.

To achieve the foregoing objective, this application uses the following technical solutions.

According to a first aspect, a drive circuit is provided, where the drive circuit is used in a transmit circuit in an electronic device supporting full-duplex communication, and the drive circuit includes: a transimpedance amplifier, including a transconductor, a first driving stage, a second driving stage, a first feedback circuit, and a second feedback circuit, where a first input end of the transconductor is coupled to one end of the first feedback circuit, a second input end of the transconductor is coupled to one end of the second feedback circuit, a first output end of the transconductor is coupled to an input end of the first driving stage, the other end of the first feedback circuit is coupled to a first output end of the first driving stage, a second output end of the transconductor is coupled to an input end of the second driving stage, the other end of the second feedback circuit is coupled to a first output end of the second driving stage, and a second output end of the first driving stage and a second output end of the second driving stage are separately coupled to a differential output end of the transimpedance amplifier; and a hybrid circuit, including a first impedance circuit having a first node and a second impedance circuit having a second node, where the first impedance circuit is coupled between the first output end of the first driving stage and the second output end of the second driving stage, the second impedance circuit is coupled between the first output end of the second driving stage and the second output end of the first driving stage, and the first node and the second node are coupled to a receive circuit of the electronic device.

In the foregoing technical solution, the first feedback circuit and the second feedback circuit in the transimpedance amplifier are configured to convert a differential input current received by an input end of the transimpedance amplifier into a differential voltage. The transconductor in the transimpedance amplifier is configured to stabilize a common-mode voltage at the input end of the transimpedance amplifier and conduct the first driving stage and a second driving stage. The first driving stage and the second driving stage may be configured to amplify the differential voltage to generate a transmit signal (which may also be referred to as an output voltage) at the differential output end of the transimpedance amplifier, so that power consumption is not directly correlated with an amplitude of the transmit signal, thereby reducing power consumption. In addition, in the hybrid circuit, the first impedance circuit is coupled between the output ends of the first driving stage and the second driving stage, and the second impedance circuit is coupled between the other output ends of the first driving stage and the second driving stage, so that voltages corresponding to the transmit signal at the first node and the second node are zero, to avoid impact of a transmit signal on a receive signal in a full-duplex communication process.

In a possible implementation of the first aspect, voltages output by the first output end and the second output end of the transconductor are equal. In the foregoing possible implementation, the transconductor can provide a same conduction voltage for the first driving stage and the second driving stage, thereby reducing a quantity of conduction voltages provided by the transconductor, and ensuring consistency between the first driving stage and the second driving stage.

In a possible implementation of the first aspect, each driving stage in the first driving stage and the second driving stage includes a first drive branch, an output impedance, and a second drive branch, where an input end of the first drive branch and an input end of the second drive branch are coupled to the input end of the driving stage, an output end of the first drive branch and one end of the output impedance are coupled to the first output end of the driving stage, and the other end of the output impedance and an output end of the second drive branch are coupled to the second output end of the driving stage. In the foregoing possible implementation, a total impedance of the first drive branch, the second drive branch, and the output impedance may be used as a single-ended output impedance, so that the single-ended output impedance is implemented by combining a passive impedance (namely, impedances of the two output driving stages) and an active impedance (namely, the output impedance). In this way, power consumption is not directly correlated with an amplitude of an output voltage.

In a possible implementation of the first aspect, the first drive branch includes a plurality of first transistor groups coupled in parallel, and each first transistor group includes a first transistor and a second transistor that are coupled in series between a power supply end and a ground end; and the second drive branch includes a plurality of second transistor groups coupled in parallel, and each second transistor group includes a third transistor and a fourth transistor that are coupled in series between the power supply end and the ground end. Optionally, the first transistor and the third transistor are P-type transistors, and the second transistor and the fourth transistor are N-type transistors. In the foregoing possible implementation, a current ratio of the first drive branch to the second drive branch can be implemented by adjusting a quantity of conducted transistors in the plurality of first transistor groups in the first drive branch and a quantity of conducted transistors in the plurality of second transistor groups in the second drive branch.

In a possible implementation of the first aspect, a current ratio of the first drive branch to the second drive branch is adjustable. The output impedance is an adjustable impedance. In the foregoing possible implementation, the total impedance of the first drive branch, the second drive branch, and the output impedance can be adjusted by adjusting the current ratio of the first drive branch to the second drive branch and the output impedance.

In a possible implementation of the first aspect, the output impedance includes at least one of a resistor, a capacitor, or an inductor. In the foregoing possible implementations, flexibility and diversity of design of the output impedance are improved.

In a possible implementation of the first aspect, the first impedance circuit includes a first impedance and a second impedance that are coupled in series, the first impedance and the second impedance are coupled to the first node, the second impedance circuit includes a third impedance and a fourth impedance that are coupled in series, the third impedance and the fourth impedance are coupled to the second node, the first impedance is equal to the third impedance, and the second impedance is equal to the fourth impedance. Optionally, an impedance ratio of the first impedance to the second impedance is adjustable. In the foregoing possible implementation, it can be ensured that voltages corresponding to the transmit signal at the first node and the second node are zero, so that the transmit signal and the receive signal are separated at the first node and the second node, to avoid impact of the transmit signal on the receive signal in the full-duplex communication process.

In a possible implementation of the first aspect, any one of the first impedance, the second impedance, the third impedance, and the fourth impedance includes at least one of a resistor, a capacitor, or an inductor. In the foregoing possible implementations, flexibility and diversity of designs of the first impedance, the second impedance, the third impedance, and the fourth impedance are improved.

In a possible implementation of the first aspect, each of the first feedback circuit and the second feedback circuit includes a feedback resistor. Further, each of the first feedback circuit and the second feedback circuit further includes a feedback capacitor, and the feedback capacitor and the feedback resistor are coupled in parallel. Optionally, both the feedback capacitor and the feedback resistor are adjustable. In the foregoing possible implementation, in each feedback circuit, the feedback capacitor and the feedback resistor are coupled in parallel, and the feedback capacitor and the feedback resistor may form a first-order low-pass filter configured to perform low-pass filtering on a transmitted signal.

In a possible implementation of the first aspect, the transmit circuit further includes a digital-to-analog converter, and a differential output end of the digital-to-analog converter is coupled to a differential input end of the transimpedance amplifier.

According to another aspect, this application further provides a chip, and the drive circuit provided in the first aspect or any one of the possible implementations of the first aspect may be integrated into the chip.

According to another aspect, this application further provides a transmit circuit. The transmit circuit supports Ethernet communication. The transmit circuit includes a digital-to-analog converter and a drive circuit. The digital-to-analog converter may be configured to convert a current signal in a digital domain into a differential input current signal in an analog domain. The drive circuit may be configured to generate a transmit signal based on the differential input current. The drive circuit is the drive circuit provided in the first aspect or any one of the possible implementations of the first aspect.

According to another aspect, this application further provides an electronic device supporting full-duplex communication. The electronic device includes a transmit circuit and a receive circuit. The transmit circuit includes the drive circuit provided in the first aspect or any one of the possible implementations of the first aspect. The first node and the second node in the drive circuit are coupled to the receive circuit, and may be specifically coupled to an analog front end of the receive circuit. Optionally, the electronic device supports Ethernet communication. Optionally, the electronic device is a vehicle-mounted device.

It may be understood that any one of the chip, the transmit circuit, and the electronic device provided above includes a same or corresponding feature of the drive circuit provided above. Therefore, for beneficial effects that can be achieved by the chip, the transmit circuit, and the electronic device, refer to beneficial effects of the corresponding drive circuit provided above. Details are not described herein again.

### BRIEF DESCRIPTION OF DRAWINGS

FIG. 1 is a diagram of a structure of an electronic device according to an embodiment of this application;
FIG. 2 is a diagram of a structure of a voltage-type drive circuit according to an embodiment of this application;
FIG. 3 is a diagram of a structure of a drive circuit according to an embodiment of this application;
FIG. 4 is a diagram of a structure of another drive circuit according to an embodiment of this application;
FIG. 5 is a diagram of a structure of still another drive circuit according to an embodiment of this application;
FIG. 6 is a diagram of a structure of another drive circuit according to an embodiment of this application;
FIG. 7 is a diagram of a structure of still another drive circuit according to an embodiment of this application;
FIG. 8 is a diagram of a structure of another electronic device according to an embodiment of this application.

### DESCRIPTION OF EMBODIMENTS

The making and use of embodiments are discussed in detail below. It should be understood, however, that many applicable inventive concepts provided in this application may be implemented in a plurality of specific environments. The specific embodiments discussed are merely illustrative of specific ways to implement and use this description and this technology, and do not limit the scope of this application.

Unless otherwise defined, all technical terms used herein have the same meaning as those commonly known to a person of ordinary skill in the art.

The circuits or other components may be described as or referred to as "configured to" perform one or more tasks. In this case, the term "configured to" is used for implying a structure by indicating that a circuit/component includes a structure (for example, a circuit system) that performs one or more tasks during operation. Therefore, even when a specified circuit/component is currently not operable (for example, not opened), the circuit/component may also be referred to as being configured to perform the task. Circuits/components used in conjunction with the "configured to" phrase include hardware, for example, a circuit for performing an operation.

The following describes technical solutions in embodiments of this application with reference to the accompanying drawings in embodiments of this application. In this application, "at least one" means one or more, and "a plurality of" means two or more. The term "and/or" describes an association relationship between associated objects and may indicate three relationships. For example, A and/or B may indicate the following cases: Only A exists, both A and B exist, and only B exists, where A and B may be singular or plural. The character "/" usually indicates an "or" relationship between the associated objects. "At least one of the following items (pieces)" or a similar expression thereof indicates any combination of these items, including a single item (piece) or any combination of a plurality of items (pieces). For example, at least one item (piece) of a, b, or c may represent: a, b, c, a and b, a and c, b and c, or a, b and c, where a, b, and c may be singular or plural.

In embodiments of this application, terms such as "first" and "second" are used to distinguish between objects with similar names or functions or effects. A person skilled in the art may understand that the terms such as "first" and "second" do not limit a quantity and an execution sequence. The term "coupling" is used for representing an electrical connection, including a direct connection through a wire or a connection end or an indirect connection through another device. Therefore, "coupling" should be considered as a generalized electronic communication connection.

In addition, a transistor in embodiments of this application may be a metal oxide semiconductor (metal oxide semiconductor, MOS) transistor, and a type of the MOS transistor may include an N-type metal oxide semiconductor (N-type metal oxide semiconductor, NMOS) transistor and a P-type metal oxide semiconductor (P-type metal oxide semiconductor, PMOS) transistor.

It should be noted that in this application, the word like "example" or "for example" is used to represent giving an example, an illustration, or a description. Any embodiment or design solution described as an "example" or "for example" in this application should not be explained as being more preferred or more advantageous than another embodiment or design solution. Exactly, use of the word like "example" or "for example" is intended to present a related concept in a specific manner.

The technical solutions of this application may be applied to various electronic devices that perform data transmission based on Ethernet and support full-duplex communication. Optionally, the technical solutions may also be applied to electronic devices in the field of another network other than the Ethernet. For example, the another network may include a wired network. The electronic device may include but is not limited to a mobile phone, a tablet computer, a computer, a laptop computer, a video camera, a camera, a wearable device, a vehicle-mounted device (for example, a car, a bicycle, an electric vehicle, an airplane, a ship, a train, or a high-speed railway), a virtual reality (virtual reality, VR) device, an augmented reality (augmented reality, AR) device, an intelligent robot, or the like. Optionally, the electronic device may support one Ethernet protocol, or may be compatible with a plurality of Ethernet protocols. The Ethernet protocol may include but is not limited to the 100BASE-T1 protocol, the 1000BASE-T1 protocol, or the like.

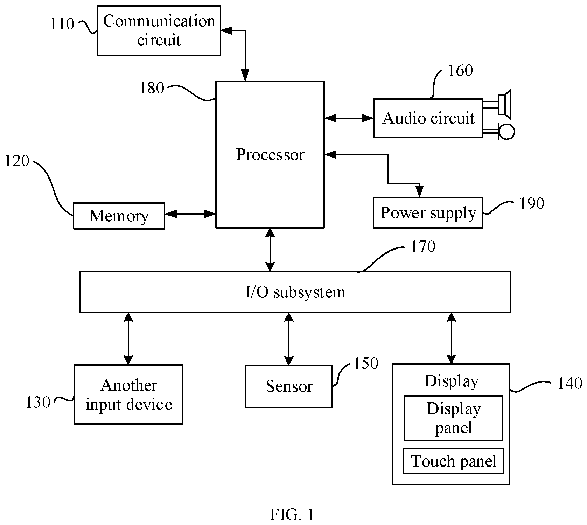

FIG. 1 is a diagram of a structure of an electronic device according to an embodiment of this application. The electronic device may include components such as a communication circuit 110, a memory 120, another input device 130, a display 140, a sensor 150, an audio circuit 160, an I/O subsystem 170, a processor 180, and a power supply 190. The processor 180 is respectively connected to the RF circuit 110, the memory 120, the audio circuit 160, and the power supply 190. The I/O subsystem 170 is separately connected to the another input device 130, the display 140, and the sensor 150.

The following describes the components of the electronic device in detail with reference to FIG. 1.

The communication circuit 110 may be configured to receive data and send data, for example, receive and send a signal in a call process. Optionally, the communication circuit 110 may further communicate with a network and another device in a wired communication manner. In this application, the communication circuit 110 may include a transmit circuit and a receive circuit. The transmit circuit may include a line driver (line driver, LD) circuit. The line driver circuit may be a current-type drive circuit, or may be a voltage-type drive circuit.

The memory 120 may be configured to store data, a software program, and a module, and mainly includes a program storage area and a data storage area. The program storage area may store an operating system, an application program required by at least one function like a voice playing function or an image playing function, and the like. The data storage area may store data such as audio data, image data, or a phone book created according to use of the electronic device, and the like. In addition, the electronic device may include a high-speed random access memory, or may include a nonvolatile memory like at least one magnetic disk storage device, a flash storage device, or another volatile solid-state storage device.

The processor 180 is a control center of the electronic device. The processor 180 is connected to all parts of the entire electronic device by using various interfaces and lines, and performs various functions of the electronic device and data processing by running or executing the software program and/or the module stored in the memory 120 and invoking data stored in the memory 120, to perform overall monitoring on the electronic device. In some possible embodiments, the processor 180 may include an application processor (application processor, AP) and a baseband processor (modem). The baseband processor may also be referred to as a modem. An operating system, a user interface, an application program, and the like of the electronic device may run and be processed on the AP, and a communication function may be processed on the baseband processor.

The another input device 130 may be configured to: receive input digital or character information, and generate key signal input related to user settings and function control of the electronic device. The display 140 may be configured to display information input by a user or information provided for a user and various menus of the electronic device, and may further accept input of the user. The display 140 may include a display panel and a touch panel. The sensor 150 may include one or more sensors, configured to provide status evaluation in various aspects for the electronic device. For example, the sensor 150 includes an optical sensor, a motion sensor, or another sensor. The audio circuit 160 may provide an audio interface between the user and the electronic device, for example, configured to output audio data from the processor 180, or transmit external audio data to the processor 180 for processing. The I/O subsystem 170 is configured to control an external input/output device, for example, configured to control the another input device 130, the sensor 150, and the display 140. The power supply 190 (for example, a battery) is configured to supply power to the foregoing components. For example, the power supply 190 may be logically connected to the processor 180 by using a power management system, to implement functions such as charge management, discharge management, and power consumption management by using the power management system.

A person skilled in the art may understand that the structure of the electronic device shown in FIG. 1 constitutes no limitation on the electronic device, and the electronic device may include more or fewer components than those shown in the figure, or combine some components, or have different component arrangements.

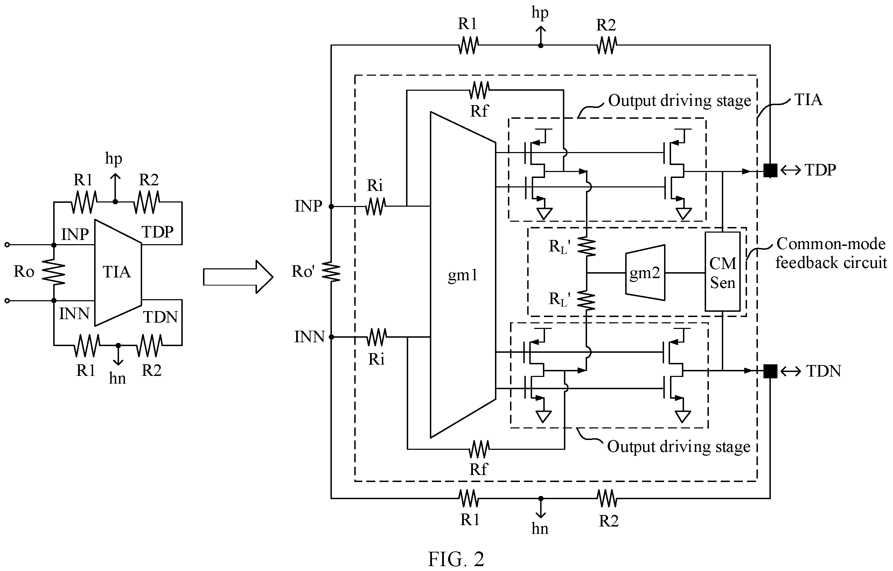

FIG. 2 is a diagram of a structure of a voltage-type drive circuit according to an embodiment of this application. The voltage-type drive circuit may be used in the communication circuit of the electronic device provided above, and may be specifically used in the transmit circuit of the communication circuit.

The voltage-type drive circuit includes a conversion resistor Ro, a transimpedance amplifier TIA, and a hybrid circuit. The transimpedance amplifier TIA has a differential input end and a differential output end. The differential input end includes an input end INP and an input end INN. The differential output end includes an output end TDP and an output end TDN. The conversion resistor Ro is coupled between the input end INP and the input end INN. The hybrid circuit includes resistors R1 and R2 that are coupled in series between the input end INP and the output end TDP, and resistors R1 and R2 that are coupled in series between the input end INN and the output end TDN, where R1=R2.

The transimpedance amplifier TIA includes two input resistors Ri, a first transconductor gm1, two feedback resistors Rf, two output driving stages, and a common-mode feedback circuit. The two input resistors Ri are respectively coupled between two input ends of the first transconductor gm1 and the differential input end of the transimpedance amplifier TIA. The two feedback resistors Rf are respectively coupled between the two input ends of the first transconductor gm1 and first output ends of the two output driving stages. The common-mode feedback circuit is separately coupled to first output ends of the two output driving stages and second output ends of the two output driving stages, and the second output ends of the two output driving stages are respectively coupled to the output end TDP and the output end TDN of the transimpedance amplifier TIA.

Each of the foregoing two output driving stages includes a first transistor group coupled in series between a power supply end and a ground end, and a second transistor group coupled in series between the power supply end and the ground end. A gate of the first transistor group and a gate of the second transistor group are separately coupled to a group of output ends of the first transconductor gm1. An output end of the first transistor group is a first output end of a corresponding output driving stage, and an output end of the second transistor group is a second output end of the corresponding output driving stage. Each of the first transistor group and the second transistor group may include one P-type transistor and one N-type transistor.

The common-mode feedback circuit includes two resistors R_{L}' coupled in series between the first output ends of the two output driving stages, a second transconductor gm2, and a common-mode voltage induction circuit CM Sen. One end of the second transconductor gm2 is coupled to a coupling point of the two resistors R_{L}', and the common-mode voltage induction circuit CM Sen is separately coupled to the other end of the second transconductor gm2 and the second output ends of the two output driving stages.

In the voltage-type drive circuit, the conversion resistor Ro is configured to convert an input current into a voltage, and the 100Ω output impedance is implemented by combining a passive impedance (namely, impedances of the two output driving stages) and an active impedance (namely, two input resistors Ri), so that power consumption is not directly correlated with an amplitude of an output voltage. A voltage at two ends of the conversion resistor Ro is not zero, and has a specific voltage swing. The hybrid (hybrid) is implemented by adjusting a ratio of the resistor R1 to the resistor R2 and an input/output amplitude ratio of the transimpedance amplifier TIA, so that voltages corresponding to a transmit signal at nodes hp and hn are zero, to separate the transmit signal from a receive signal at the nodes hp and hn. The common-mode feedback circuit is configured to provide an input/output common-mode voltage for the drive circuit. A current ratio of two transistor groups in an output driving stage is 1:m, R_{L}'=mR_{L}/2, and R_{L}=50Ω, where R_{L}' is an adjustable resistor, and a common-mode loop gain Av=gm2×R_{L}' is a constant by adjusting R_{L}'. R2=mR1, R1+R2=Ro=Ri=Rf=4mR_{L}, Ro=Ro'//2Ri, where // indicates a parallel connection.

Compared with a current-type drive circuit in the conventional technology, the voltage-type drive circuit has an advantage of low power consumption because the power consumption is not directly correlated with an amplitude of the output voltage. However, when the common-mode feedback circuit is used, stability of a corresponding common-mode loop needs to be considered, and the stability of the common-mode loop affects stability of a feedback loop in which a feedback resistor is located, resulting in a high design difficulty and a complex circuit structure.

In view of this, embodiments of this application provide another voltage-type drive circuit. The voltage-type drive circuit may also be referred to as a drive circuit for short. In the drive circuit, a hybrid circuit is coupled to an output end of a transimpedance amplifier, and a common-mode voltage at an input end of the transimpedance amplifier can be stabilized by using a transconductor in the transimpedance amplifier, without designing a common-mode loop separately. This can reduce power consumption, simplify a circuit structure, and reduce design complexity.

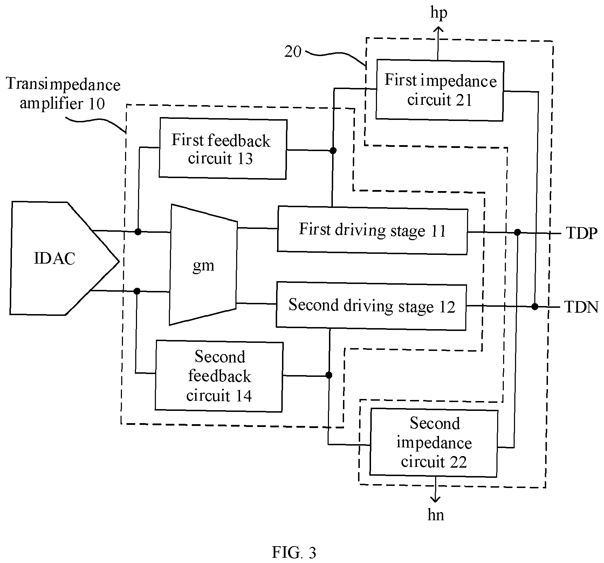

FIG. 3 is a diagram of a structure of a drive circuit according to an embodiment of this application. The drive circuit includes a transimpedance amplifier 10 and a hybrid circuit 20. The transimpedance amplifier 10 has a differential input end and a differential output end. The hybrid circuit 20 is coupled to the differential output end of the transimpedance amplifier 10.

The drive circuit may be used in an electronic device that performs data transmission based on the Ethernet and supports full-duplex communication, specifically, may be used in a transmit circuit in the electronic device, and is configured to drive a transmit signal in the transmit circuit. Optionally, the drive circuit may also be applied to the field of another network other than the Ethernet. For example, the another network may include a wired network.

Optionally, the electronic device (or referred to as the transmit circuit) may support one Ethernet protocol, or may be compatible with a plurality of Ethernet protocols, so that the drive circuit may also be configured to drive transmit signals corresponding to different Ethernet protocols. For example, the Ethernet protocol may include but is not limited to the 100BASE-T1 protocol or the 1000BASE-T1 protocol.

In a possible embodiment, as shown in FIG. 3, the transimpedance amplifier 10 may include a transconductor gm, a first driving stage 11, a second driving stage 12, a first feedback circuit 13, and a second feedback circuit 14, and the transconductor gm may be of a pseudo-differential structure. A first input end of the transconductor gm is coupled to one end of the first feedback circuit 13, a second input end of the transconductor gm is coupled to one end of the second feedback circuit 14, and the first input end and the second input end of the transconductor gm are separately coupled to the differential input end of the transimpedance amplifier 10. A first output end of the transconductor gm is coupled to an input end of the first driving stage 11, the other end of the first feedback circuit 13 is coupled to a first output end of the first driving stage 11, a second output end of the transconductor gm is coupled to an input end of the second driving stage 12, the other end of the second feedback circuit 14 is coupled to a first output end of the second driving stage 12, a second output end of the first driving stage 11 and a second output end of the second driving stage 12 are separately coupled to the differential output end of the transimpedance amplifier 10, and the differential output end may be represented as a node TDP and a node TDN. Optionally, voltages output by the first output end and the second output end of the transconductor gm are equal. To be specific, the voltages that are output by the transconductor gm through the first output end and the second output end respectively and that are used to conduct the first driving stage 11 and the second driving stage 12 are equal. Optionally, the transconductor gm may be of the pseudo-differential structure or a fully differential structure.

The first driving stage 11 and the second driving stage 12 have functions of providing a matched impedance and generating a drive current. In this embodiment of this application, the first driving stage 11 and the second driving stage 12 are specifically configured to: provide the matched impedance for the differential output end of the drive circuit, and generate the drive current to drive a load impedance. The load impedance may include an impedance of the drive circuit and an impedance of a peer device that receives a transmit signal.

Specifically, in the transimpedance amplifier 10, the first feedback circuit 13 and the second feedback circuit 14 may be configured to convert a differential input current received by the differential input end of the transimpedance amplifier 10 into a differential voltage. The transconductor gm may be configured to stabilize a common-mode voltage at the input end of the transimpedance amplifier and conduct the first driving stage 11 and the second driving stage 12. The first driving stage 11 and the second driving stage 12 may be configured to amplify the differential voltage to generate a transmit signal at the differential output end of the transimpedance amplifier 10.

Further, structures of the first driving stage 11 and the second driving stage 12 in the transimpedance amplifier 10 may be the same, and each driving stage may include two drive branches and one output impedance. For ease of differentiation, the two drive branches in the first driving stage 11 are referred to as a first drive branch and a second drive branch below, and the two drive branches in the second driving stage 12 are referred to as a third drive branch and a fourth drive branch below.

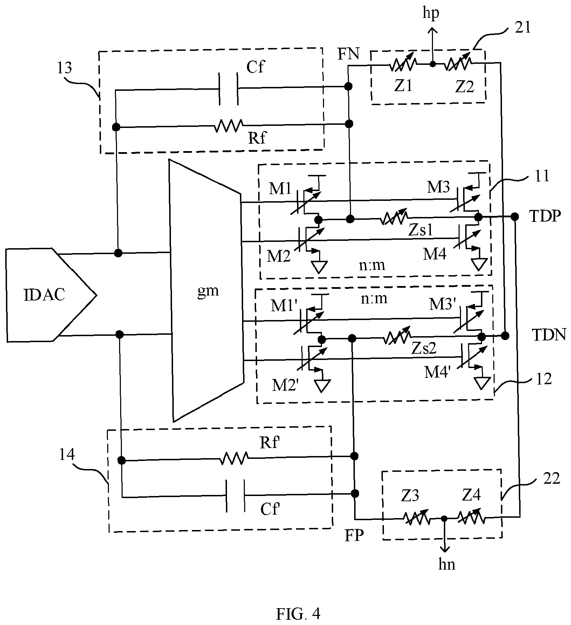

In an implementation, as shown in FIG. 4, the first driving stage 11 may include the first drive branch, a first output impedance Zs1, and the second drive branch. An input end of the first drive branch and an input end of the second drive branch are coupled to the input end of the first driving stage 11, an output end of the first drive branch and one end of the first output impedance Zs1 are coupled to the first output end of the first driving stage 11, and the other end of the first output impedance Zs1 and an output end of the second drive branch are coupled to the second output end of the first driving stage 11.

A total impedance of the first drive branch, the second drive branch, and the first output impedance Zs1 may be used as a single-ended output impedance Rout1. The first output impedance Zs1 may include one, or a combination of any two, or all of a resistor, an inductor, or a capacitor.

Optionally, a current ratio of the first drive branch to the second drive branch is adjustable, the current ratio may be represented as n:m, and both n and m are positive numbers. Optionally, the first output impedance Zs1 may be an adjustable impedance. After the current ratio of the first drive branch to the second drive branch is determined, the first output impedance Zs1 is adjusted, to implement adjustment of the total impedance Rout1 of the first drive branch, the second drive branch, and the first output impedance Zs1.

Optionally, the first drive branch includes a plurality of first transistor groups coupled in parallel, conduction or cutoff of any one of the plurality of first transistor groups is adjustable, and each first transistor group includes a first transistor M1 and a second transistor M2 that are coupled in series between a power supply end and a ground end. The second drive branch includes a plurality of second transistor groups coupled in parallel, conduction or cutoff of any one of the plurality of second transistor groups is adjustable, and each second transistor group includes a third transistor M3 and a fourth transistor M4 that are coupled in series between the power supply end and the ground end. The first transistor M1 and the third transistor M3 may be P-type transistors, and the second transistor M2 and the fourth transistor M4 may be N-type transistors. FIG. 4 shows only one first transistor group and one second transistor group.

Similarly, as shown in FIG. 4, the second driving stage 12 may include the third drive branch, a second output impedance Zs2, and the fourth drive branch. An input end of the third drive branch and an input end of the fourth drive branch are coupled to the input end of the second driving stage 12, an output end of the third drive branch and one end of the second output impedance Zs2 are coupled to the first output end of the second driving stage 12, and the other end of the second output impedance Zs2 and an output end of the fourth drive branch are coupled to the second output end of the second driving stage 12.

A total impedance of the third drive branch, the second output impedance Zs2, and the fourth drive branch may be used as a single-ended output impedance Rout2. The second output impedance Zs2 may include one, or a combination of any two, or all of a resistor, an inductor, or a capacitor.

Optionally, a current ratio of the third drive branch to the fourth drive branch is adjustable, and the current ratio may also be represented as n:m. Optionally, the second output impedance Zs2 may be an adjustable impedance. After the current ratio of the third drive branch to the fourth drive branch is determined, the second output impedance Zs2 is adjusted, to implement adjustment of the total impedance Rout2 of the third drive branch, the second output impedance Zs2, and the fourth drive branch.

Optionally, the third drive branch includes a plurality of third transistor groups coupled in parallel, conduction or cutoff of any one of the plurality of third transistor groups is adjustable, and each third transistor group includes a fifth transistor M1' and a sixth transistor M2' that are coupled in series between the power supply end and the ground end. The fourth drive branch includes a plurality of fourth transistor groups coupled in parallel, conduction or cutoff of any one of the plurality of fourth transistor groups is adjustable, and each fourth transistor group includes a seventh transistor M3' and an eighth transistor M4' that are coupled in series between the power supply end and the ground end. The fifth transistor M1' and the seventh transistor M3' may be P-type transistors, and the sixth transistor M2' and the eighth transistor M4' may be N-type transistors.

In the first driving stage 11 and the second driving stage 12, the first output impedance Zs1 is equal to the second output impedance Zs2, the first transistor M1 and the fifth transistor M1' may be transistors of a same size, the second transistor M2 and the sixth transistor M2' may be transistors of a same size, the third transistor M3 and the seventh transistor M3' may be transistors of a same size, and the fourth transistor M4 and the eighth transistor M4' may be transistors of a same size.

In addition, that voltages output by the first output end and the second output end of the transconductor gm are equal may be specifically: Voltages that are output by the transconductor gm and used to conduct the transistors M1, M1', M3, and M3' are equal, and voltages that are output by the transconductor gm and used to conduct the transistors M2, M2', M4, and M4' are also equal.

Further, as shown in FIG. 3 or FIG. 4, the hybrid circuit 20 may include a first impedance circuit 21 and a second impedance circuit 22. The first impedance circuit 21 is coupled between the first output end of the first driving stage 11 and the second output end of the second driving stage 12, and the second impedance circuit 22 is coupled between the first output end of the second driving stage 12 and the second output end of the first driving stage 11.

Optionally, the first impedance circuit 21 may include a first impedance Z1 and a second impedance Z2 that are coupled in series, and the second impedance circuit 22 may include a third impedance Z3 and a fourth impedance Z4 that are coupled in series. The first impedance Z1 and the second impedance Z2 are coupled to a first node hp, a node at the other end of the first impedance Z1 is represented as FN, the third impedance Z3 and the fourth impedance Z4 are coupled to a second node hn, and a node at the other end of the third impedance Z3 is represented as FP. Any one of the first impedance Z1, the second impedance Z2, the third impedance Z3, and the fourth impedance Z4 may include one, or a combination of two, or all of a resistor, a capacitor, or an inductor. In an implementation, the first impedance Z1 is equal to the third impedance Z3 (that is, Z1=Z3), the second impedance Z2 is equal to the fourth impedance Z4 (that is, Z2=Z4), and an impedance ratio of the first impedance Z1 to the second impedance Z2 is adjustable, that is, a value of Z1/Z2 is adjustable.

Specifically, to separate a transmit signal from a receive signal at the node hp and the node hn, voltages corresponding to the transmit signal at the node hp and the node hn need to be zero, which is specifically implemented by adjusting an impedance ratio of the first impedance Z1 to the second impedance Z2, a current ratio of the first drive branch to the second drive branch, an impedance ratio of the third impedance Z3 to the fourth impedance Z4, and a current ratio of the third drive branch to the fourth drive branch.

For example, if n:m=1:2, a voltage V_{TDP} of the node TDP, a voltage of the node TDN, a half of a voltage V_{FN} of the node FN, and a half of a voltage V_{FP} of the node FP are equal, that is, V_{TDP}=V_{TDN}=V_{FP}×0.5=V_{FN}×0.5. It is assumed that Z1=Z3=2Z2=2Z4. According to the superposition theorem, a voltage of the node hp is Vhp=V_{TDP}×Z1/(Z1+Z2)+V_{F}N×Z2/(Z1+Z2), and a voltage of the node hn is Vhn=V_{TDN}×Z2/(Z2+Z4)+V_{FP}×Z4/(Z2+Z4). Because polarities of the node TDP and the node FP are opposite, and polarities of the node TDN and the node FN are opposite, Vhp=Vhn=0.

Further, as shown in FIG. 4, structures of the first feedback circuit 13 and the second feedback circuit 14 in the transimpedance amplifier 10 may be the same, and each feedback circuit may include a feedback resistor. Further, each feedback circuit may include a feedback capacitor coupled in parallel to the feedback resistor. In FIG. 4, an example in which each feedback circuit includes a feedback resistor and a feedback capacitor is used for description. In the first feedback circuit 13, a feedback resistor is referred to as a first feedback resistor Rf, and a feedback capacitor is referred to as a first feedback capacitor Cf. In the second feedback circuit 14, a feedback resistor is referred to as a second feedback resistor Rf, and a feedback capacitor is referred to as a second feedback capacitor Cf.

A resistance value of the first feedback resistor Rf is equal to a resistance value of the second feedback resistor Rf (that is, Rf=Rf), and a capacitance value of the first feedback capacitor Cf is equal to a capacitance value of the second feedback capacitor Cf (that is, Cf=Cf). The first feedback resistor Rf and the first feedback capacitor Cf may form a first-order low-pass filter, and the second feedback resistor Rf and the second feedback capacitor Cf may also form a first-order low-pass filter. The first-order low-pass filter may be configured to perform low-pass filtering.

Optionally, the resistance value of the first feedback resistor Rf is equal to the resistance value of the second feedback resistor Rf, and the capacitance value of the first feedback capacitor Cf is equal to the capacitance value of the second feedback capacitor Cf.

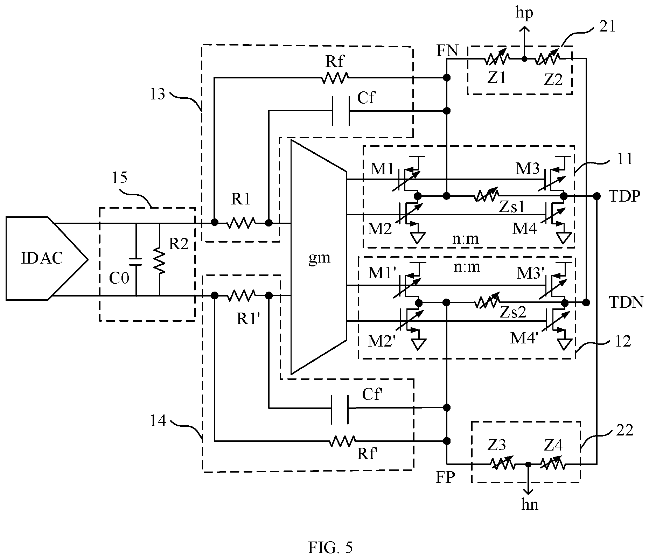

Optionally, each of the first feedback circuit 13 and the second feedback circuit 14 further includes a first resistor, and the first resistor is coupled between one end of the feedback capacitor and one end of the feedback resistor. As shown in FIG. 5, a first resistor in the first feedback circuit 13 is represented as R1, and a first resistor in the second feedback circuit 14 is represented as R1'.

In addition, the drive circuit may further include a filter circuit 15 coupled to the input end of the transimpedance amplifier 10. The filter circuit 15 may be configured to perform filtering processing on a signal input to the transimpedance amplifier 10. For example, as shown in FIG. 5, the filter circuit 15 includes a filter resistor R2 and a filter capacitor C0 that are located between the first input end and the second input end of the transimpedance amplifier 10 and that are coupled in parallel. When the drive circuit includes the first feedback circuit 13, the second feedback circuit 14, and the filter circuit at the same time, the three circuits may form a second-order filter network. During actual application, the drive circuit may not include the first feedback circuit 13 and the second feedback circuit 14, but includes only the filter resistor R2 and the filter capacitor C0. This is not specifically limited in embodiments of this application.

Further, the transmit circuit may include a digital-to-analog converter (analog-to-digital converter, DAC). The digital-to-analog converter DAC has an input end and an output end. The input end of the digital-to-analog converter DAC may be configured to receive an input current, and the output end of the digital-to-analog converter DAC is coupled to the differential input end of the transimpedance amplifier 10. The digital-to-analog converter may be configured to convert an input current of a digital signal into an input current of an analog signal, so that the transimpedance amplifier 10 may receive the input current of the analog signal. Optionally, the digital-to-analog converter DAC is a current-mode digital-to-analog converter IDAC or a voltage-mode digital-to-analog converter VDAC.

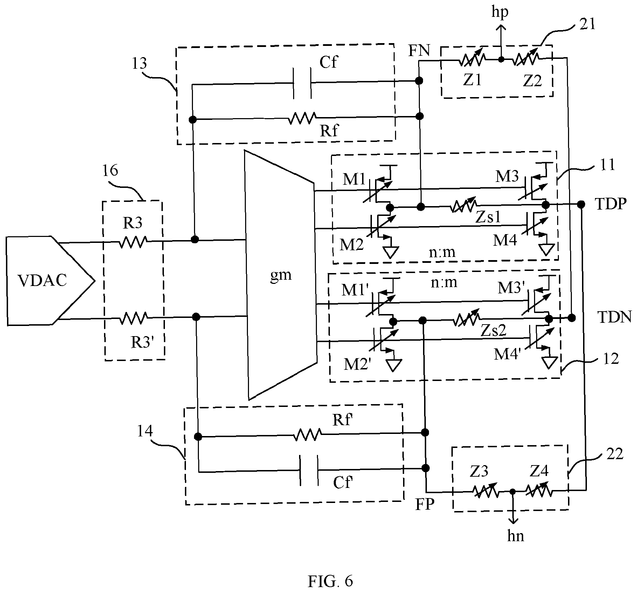

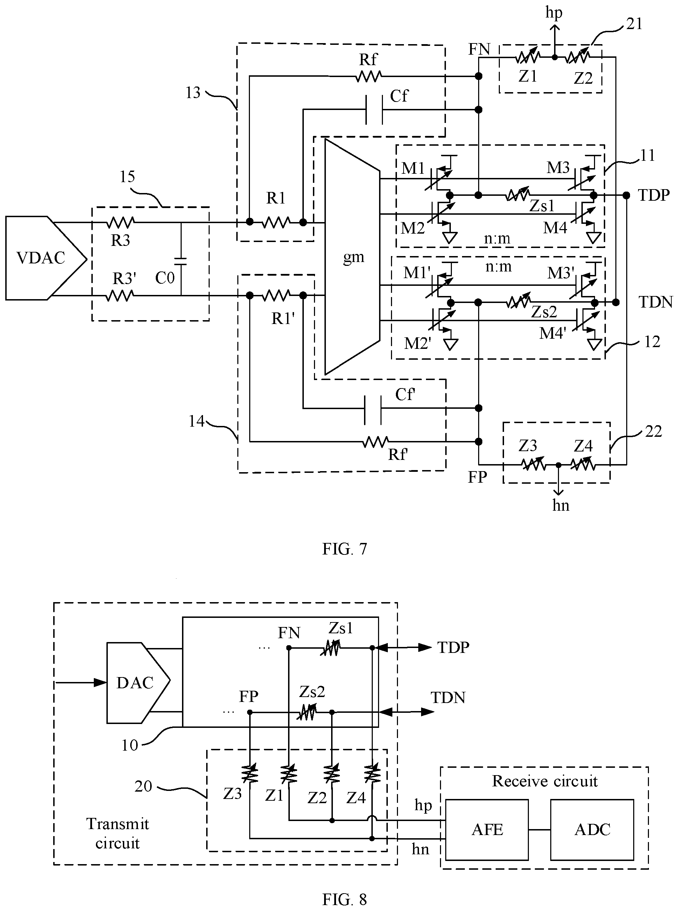

It may be understood that, in FIG. 3 to FIG. 5, an example in which the digital-to-analog converter DAC is the current-mode digital-to-analog converter IDAC is used for description. When the digital-to-analog converter DAC is the voltage-mode digital-to-analog converter VDAC, for a structure corresponding to the drive circuit, reference is made to FIG. 6 and FIG. 7. In FIG. 6, the drive circuit further includes a resistor circuit 16, and the resistor circuit includes third resistors R3 and R3' coupled to the output end of the digital-to-analog converter DAC. In FIG. 7, the filter resistor R2 in the filter circuit 15 in the drive circuit may be replaced with the third resistors R3 and R3'.

In the drive circuit provided in embodiments of this application, the transimpedance amplifier 10 in the drive circuit may be configured to receive a differential input current, convert the differential input current into a differential voltage, and amplify the differential voltage to generate a transmit signal. In this process, transistors and impedances (for example, Zs1 and Zs2) in the first driving stage 11 and the second driving stage 12 implement load impedances matching at the output ends, so that power consumption is not directly correlated with an amplitude of the output voltage. In this way, power consumption of the drive circuit can be reduced. In addition, the hybrid circuit 20 may be configured to make voltages corresponding to a transmit signal at the first node hp and the second node hn be zero, to separate the transmit signal from the receive signal at the first node hp and the second node hn, thereby avoiding impact of a transmit signal on a receive signal in a full-duplex communication process. In addition, compared with the drive circuit shown in FIG. 2, the drive circuit does not need to design an additional common-mode loop, thereby simplifying a circuit structure, reducing design complexity, and providing a large transmission bandwidth.

In view of this, an embodiment of this application further provides a chip. Any drive circuit provided above may be integrated into the chip, and the chip may be used in an electronic device supporting Ethernet communication.

An embodiment of this application further provides a transmit circuit. The transmit circuit supports Ethernet communication. The transmit circuit includes a digital-to-analog converter and a drive circuit. The digital-to-analog converter may be configured to convert a current signal in a digital domain into a differential input current signal in an analog domain. The drive circuit may be configured to generate a transmit signal based on the differential input current. The drive circuit may be any drive circuit provided above.

An embodiment of this application further provides an electronic device supporting Ethernet full-duplex communication. As shown in FIG. 8, the electronic device includes a transmit circuit and a receiver circuit. The receiver circuit and the transmit circuit may be coupled to a first node hp and a second node hn. The transmit circuit includes any drive circuit provided above. Optionally, the receive circuit may include an analog front end (analog front end, AFE) and an analog-to-digital converter (analog-to-digital converter, ADC). The first node hp and the second node hn may be specifically coupled to the analog front end AFE in the receive circuit.

In a possible embodiment, the electronic device may be a vehicle-mounted device, and may support one Ethernet protocol, or may be compatible with a plurality of Ethernet protocols. The Ethernet protocol may include but is not limited to the 100BASE-T1 protocol, the 1000BASE-T1 protocol, or the like.

It should be noted that all the related descriptions of the drive circuit provided above may be referred to the electronic device. Details are not described in this embodiment of this application.

Finally, it should be noted that the foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A drive circuit, wherein the drive circuit is used in a transmit circuit in an electronic device supporting full-duplex communication, and the drive circuit comprises:
a transimpedance amplifier, comprising: a transconductor, a first driving stage, a second driving stage, a first feedback circuit, and a second feedback circuit, wherein a first input end of the transconductor is coupled to one end of the first feedback circuit, a second input end of the transconductor is coupled to one end of the second feedback circuit, a first output end of the transconductor is coupled to an input end of the first driving stage, the other end of the first feedback circuit is coupled to a first output end of the first driving stage, a second output end of the transconductor is coupled to an input end of the second driving stage, the other end of the second feedback circuit is coupled to a first output end of the second driving stage, and a second output end of the first driving stage and a second output end of the second driving stage are separately coupled to a differential output end of the transimpedance amplifier; and
a hybrid circuit, comprising a first impedance circuit having a first node and a second impedance circuit having a second node, wherein the first impedance circuit is coupled between the first output end of the first driving stage and the second output end of the second driving stage, the second impedance circuit is coupled between the first output end of the second driving stage and the second output end of the first driving stage, and the first node and the second node are coupled to a receive circuit of the electronic device.

2. The drive circuit according to claim 1, wherein voltages output by the first output end and the second output end of the transconductor are equal.

3. The drive circuit according to claim 1 or 2, wherein each driving stage in the first driving stage and the second driving stage comprises a first drive branch, an output impedance, and a second drive branch, wherein an input end of the first drive branch and an input end of the second drive branch are coupled to the input end of the driving stage, an output end of the first drive branch and one end of the output impedance are coupled to the first output end of the driving stage, and the other end of the output impedance and an output end of the second drive branch are coupled to the second output end of the driving stage.

4. The drive circuit according to claim 3, wherein the first drive branch comprises a plurality of first transistor groups coupled in parallel, and each first transistor group comprises a first transistor and a second transistor that are coupled in series between a power supply end and a ground end; and
the second drive branch comprises a plurality of second transistor groups coupled in parallel, and each second transistor group comprises a third transistor and a fourth transistor that are coupled in series between the power supply end and the ground end.

5. The drive circuit according to claim 4, wherein the first transistor and the third transistor are P-type transistors, and the second transistor and the fourth transistor are N-type transistors.

6. The drive circuit according to any one of claims 3 to 5, wherein a current ratio of the first drive branch to the second drive branch is adjustable.

7. The drive circuit according to any one of claims 3 to 6, wherein the output impedance is an adjustable impedance.

8. The drive circuit according to claim 7, wherein the output impedance comprises at least one of a resistor, a capacitor, or an inductor.

9. The drive circuit according to any one of claims 1 to 8, wherein the first impedance circuit comprises a first impedance and a second impedance that are coupled in series, the first impedance and the second impedance are coupled to the first node, the second impedance circuit comprises a third impedance and a fourth impedance that are coupled in series, the third impedance and the fourth impedance are coupled to the second node, the first impedance is equal to the third impedance, and the second impedance is equal to the fourth impedance.

10. The drive circuit according to claim 9, wherein an impedance ratio of the first impedance to the second impedance is adjustable.

11. The drive circuit according to claim 9 or 10, wherein any one of the first impedance, the second impedance, the third impedance, and the fourth impedance comprises at least one of a resistor, a capacitor, or an inductor.

12. The drive circuit according to any one of claims 1 to 11, wherein each of the first feedback circuit and the second feedback circuit comprises a feedback resistor.

13. The drive circuit according to claim 12, wherein each of the first feedback circuit and the second feedback circuit further comprises a feedback capacitor, and the feedback capacitor and the feedback resistor are coupled in parallel.

14. The drive circuit according to claim 13, wherein each of the first feedback circuit and the second feedback circuit further comprises a first resistor, and the first resistor is coupled between one end of the feedback capacitor and one end of the feedback resistor.

15. The drive circuit according to any one of claims 1 to 14, wherein the drive circuit further comprises a filter circuit located between a first input end and a second input end of the transimpedance amplifier, and the filter circuit comprises a filter resistor and a filter capacitor that are coupled in parallel.

16. The drive circuit according to any one of claims 1 to 15, wherein the transmit circuit further comprises a digital-to-analog converter, and a differential output end of the digital-to-analog converter is coupled to a differential input end of the transimpedance amplifier.

17. The drive circuit according to claim 16, wherein the digital-to-analog converter is a current-mode digital-to-analog converter or a voltage-mode digital-to-analog converter.

18. The drive circuit according to any one of claims 1 to 17, wherein the transconductor is of a pseudo-differential structure or a fully differential structure.

19. The drive circuit according to any one of claims 1 to 18, wherein the drive circuit is used in the Ethernet or a wired network.

20. An electronic device supporting full-duplex communication, wherein the electronic device comprises a transmit circuit and a receive circuit, the transmit circuit comprises the drive circuit according to any one of claims 1 to 19, and the first node and the second node in the drive circuit are coupled to the receive circuit.

21. The electronic device according to claim 20, wherein the electronic device supports Ethernet communication or wired network communication.

22. The electronic device according to claim 20 or 21, wherein the electronic device is a vehicle-mounted device.
